# EUROPÄISCHE PATENTSCHRIFT

(11) **EP 1 904 340 B1**
(45) Veröffentlichungstag und Bekanntmachung des Hinweises auf die Patenterteilung: **22.12.2010**
(21) Anmeldenummer: 06763335.4
(22) Anmeldetag: 29.05.2006
(51) Int. Cl.: B60Q 1/08

(54) **VERFAHREN UND VORRICHTUNG ZUR FAHRERUNTERSTÜTZUNG**
DRIVER ASSIST METHOD AND DEVICE
PROCEDE ET DISPOSITIF D'ASSISTANCE A UN CONDUCTEUR

(30) Priorität: 14.07.2005 DE 102005032848
(43) Veröffentlichungstag der Anmeldung: 02.04.2008
(73) Patentinhaber: Robert Bosch GmbH, 70442 Stuttgart (DE)
(72) Erfinder: MORITZ, Rainer, 70794 Filderstadt (DE); LEICHT, Holger, 71296 Heimsheim (DE)
(86) Internationale Anmeldenummer: PCT/EP2006/062677
(87) Internationale Veröffentlichungsnummer: WO 2007/006606

(56) Entgegenhaltungen:
- WO-A-02/04247
- WO-A-03/106219
- DE-A1- 19 905 114
- US-B1- 6 281 806
- PATENT ABSTRACTS OF JAPAN Bd. 2000, Nr. 14, 5. März 2001 (2001-03-05) & JP 2000 318513 A (MITSUBISHI ELECTRIC CORP), 21. November 2000 (2000-11-21)

## Beschreibung

### Stand der Technik

Die Erfindung betrifft ein Verfahren und eine Vorrichtung zur Fahrerunterstützung.

Die DE 100 53 315 A1 zeigt ein Beispiel für ein Verfahren und eine Vorrichtung zur Fahrerunterstützung, bei welcher mittels einer im Fahrzeug angebrachten Kamera Verkehrszeichen erfasst werden. Aus den von der Kamera aufgenommenen Bildern werden die Verkehrszeichen extrahiert und mit gespeicherten Mustern verglichen. Wird ein Verkehrszeichen aufgefunden, wird gegebenenfalls eine dem Verkehrszeichen entsprechende Maßnahme eingeleitet, beispielsweise ein Warnsignal erzeugt. Dabei werden auch Verkehrszeichen, die auf der Fahrspur angebracht sind, wie beispielsweise ein Zebrastreifen oder dergleichen, erkannt.

In der DE 196 27 938 A1 ist ein Beispiel für die Erkennung und Modellierung von Fahrspurrandmarkierungen aus Videobildern beschrieben, wobei als Parameter unter anderem Fahrspurbreite, Fahrspurkrürnrnung, Krümmungsändenmg und seitlicher Versatz des Fahrzeugs ermittelt werden.

Von besonderer Bedeutung im heutigen Straßenverkehr ist, dass der Fahrer eine ausreichende Sicht auf das Verkehrsgeschehen hat. Aus diesem Grund wird derzeit auch an Systemen zur kurvenabhängigen Lichtsteuerung gearbeitet, bei welchem die bisher starre Ausrichtung des Fahrzeuglichts variabel gestaltet wird, derart, dass bei Kurvenfahrt eine verbesserte Ausleuchtung der Kurve stattfindet. Ein Beispiel hierfür zeigt die DE 197 13 884 A1.

Die DE 19905114 A1 lehrt die Änderung der Charakteristik des Scheinwerfers bei einem potentiellen Gefahrenzustand, um die Orientierung des Fahrers zu erleichtern. Ein solcher Gefahrenzustand existiert bei ABS-Aktivierung, Bremspedalbetätigung oder bei bekannten Objekten mittels eines Kamera oder Radarbilds.

Die US 6281806 B1 lehrt die Erkennung von Objekten in Vorausrichtung und die Ausleuchtung derer. Auch eine gewisse Beurteilung von Gefahrensituationen, wie dem Überfahren einer Spurmarkierung wird gelehrt, entsprechend der Ausleuchtung dieser.

Die WO 03/106219 A lehrt die Steuerung der Lichtverteilung eines Kraftfahrzeugs, abhängig von durch ein Bildverarbeitungssystem detektierten Objekten und einer Prüfung, ob es sich hierbei um potentielle Hindernisse handelt, um die Veränderung der Lichtverteilung derart durchzuführen, dass das potentielle Hindernis angestrahlt wird.

Das Patent Abstract der JP 2000/318513 A zeigt ein System der Beleuchtung von Hindernissen nach ihrer Erkennung. Weiterhin führt es eine Entfernungserkennung durch, abhängig von der Erkennung einer weißen Linie auf der Straße.

Die WO 02/04247 A zeigt eine Scheinwerferansteuerung zur Beleuchtung von erkannten Straßenschildern. Auch kann ein optischer Alarm ausgeglichen werden bei zu geringem Abstand zur Person oder Gegenständen.

### Vorteile der Erfindung

Durch eine verbesserte Ausleuchtung von Gefahrenräumen, wie Abbiegespuren, Ausfahrten, Fußgängerüberwegen, etc. kann dazu beigetragen werden, Unfälle zu vermeiden und die Sicherheit im Straßenverkehr auch für Fußgänger zu erhöhen. Von besonderer Bedeutung ist, dass die Erkennung, ob ein Gefahrenraum und gegebenenfalls welcher Gefahrenraum vorliegt, videobasiert erfolgt, da auf diese Weise es möglich ist, zuverlässig und genau die tatsächlich vorhandene Verkehrssituation zu erfassen.

Besonders vorteilhaft ist, dass mit Hilfe der videobasierten Erfassung auch Hinweise auf die Entfernung zum erkannten Gefahrenraum abgeleitet werden können, so dass die Steuerung der Fahrzeugbeleuchtung abhängig von der Entfernung variiert.

Weitere Vorteile ergeben sich aus der nachfolgenden Beschreibung von Ausführungsbeispielen bzw. aus den abgängigen Patentansprüchen.

### Zeichnung

Die Erfindung wird nachstehend anhand der in der Zeichnung dargestellten Ausführungsformen näher erläutert. Dabei zeigt
Figur 1 ein Blockdiagramm eines Fahrerassistenzsystems, bei welchem die beschriebene Vorgehensweise zur Fahrerunterstützung, insbesondere zur Ausleuchtung von Gefahrenräumen, realisiert ist.
Figur 2 zeigt ein Flussdiagramm, in welchem eine bevorzugte Realisierung der Vorgehensweise zur Ausleuchtung von Gefahrenräumen als Rechnerprogramm dargestellt ist.

Die Figuren 3 bis 5 schließlich zeigen Skizzen von Verkehrssituationen zur Erläuterung der Funktionsweise des Fahrerassistenzsystems.

### Beschreibung von Ausfühmngsbeispielen

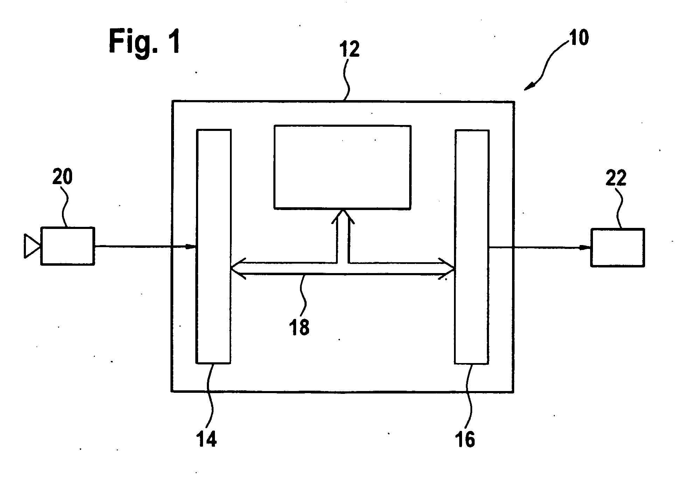

Die Figur 1 zeigt eine Fahrerassistenzvorrichtung 10, welche im wesentlichen aus wenigstens einem Rechner 12, einer Eingangsschaltung 14 sowie einer Ausgangsschaltung 16 besteht. Diese Elemente sind mit einem Bussystem 18 zum gegenseitigen Daten- und Informationsaustausch miteinander verbunden. Ferner ist wenigstens eine Kamera 20 vorgesehen, welche im Fahrzeug derart positioniert ist, dass sie die Szene vor dem Fahrzeug aufnimmt. Der Bildabschnitt der Kamera 20 ist dabei derart gewählt, dass auch Informationen, die auf der Fahrbahn selbst angebracht sind, durch die Bilder der Kamera erfasst werden. In einem ersten Ausführungsbeispiel werden entsprechende Bildsequenzen von der Kamera 20 über eine Eingangsleitung, vorzugsweise ein Bus-System an die Fahrerassistenzvorrichtung 10 übermittelt. Dort werden sie zur weiteren Verarbeitung dem Mikrocomputer 12 zugeführt, In einer anderen Ausführung ist mit der Kamera 20 eine Auswerteeinheit verbunden, welche die Bildanalysefunktion ganz oder teilweise übernimmt und der Fahrerassistenzvorrichtung 10 lediglich Ergebniswerte oder Zwischenergebnisse dieser Bildanalysefunktion, ggf. zusammen mit der Bildinformation, zur Verfügung stellt.

Die Bildsequenzen der Kamera 20 werden vom Rechner 12 bzw. der der Kamera zugeordneten, nicht dargestellten Auswerteeinheit zur Ermittlung des Verlaufs von Fahrspuren, insbesondere des Verlaufs von Fahrbahnrandmarkienmgen ausgewertet. Dies erfolgt in der Regel dadurch, dass anhand von Kontrasten im Bild Fahrbahnrandmarkierungen isoliert werden und deren Verlauf durch Transformation als mathematische Gleichung beschrieben wird, deren Parameter beispielsweise den Krümmungsradius der Fahrspurrandmarkierung darstellt. Derartige Algorithmen sind beispielsweise aus dem eingangs genannten Stand der Technik bekannt. Ferner ist bekannt, Informationen, die auf der Fahrbahn selbst angebracht sind, zu erfassen, beispielsweise Zebrastreifen. In diesem Fall wird durch Analyse der Bildsequenz ein bestimmtes Muster erkannt, welches mit einem vorab gespeicherten Muster verglichen wird und bei Übereinstimmung des Vergleiches darauf geschlossen wird, dass ein Zebrastreifen erkannt wurde.

Mit Hilfe der vorliegenden Informationen lassen sich nun Gefahrenräume erkennen. In einer ersten Ausführung werden erkannte Zebrastreifen als Gefahrenraum interpretiert. In einem zweiten Ausführungsform wird eine Ausfahrt oder Abzweigung als Gefahrenraum erkannt, wenn beispielsweise anhand der Fahrspurrandmarkierungserkennung festgestellt wird, dass eine Verzweigung einer Linie im Sinne einer zusätzlichen Fahrspur vorhanden ist und/oder wenn erkannt wird, dass eine Änderung der Linienart von einer durchgezogenen auf eine gestrichelte Linienart und eine Abzweigung der durchgezogenen Linie erfolgt. In einer dritten Ausführung werden erkannte Kreuzungen als Gefahrenraum interpretiert, wenn nämlich zwei Fahrbahnrandmarkierungen sich verzweigen und/oder wenn festgestellt wird, dass die Fahrbahnrandmarkierungen Fahrspuren überqueren. Die Ermittlung eines vorhandenen Gefahrenraums erfolgt bevorzugt dadurch, dass die aus den Markierungsverläufen abgeleitete Gleichungen (Kurven) auf Schnittpunkte und auf Winkel zwischen den Kurven untersucht werden. Beim Vorhandensein eines oder mehrerer Schnittpunkte und/oder charakteristischer Winkel lassen sich dann die oben skizzierten Situationen ableiten. Die oben dargestellten Vorgehensweise werden je nach Ausführung einzeln oder in beliebiger Kombination eingesetzt.

Je nach Ausführung erfolgt die Auswertung der Bildsequenzen im Rechner der Fahrerassistenzvorrichtung. In einem anderen Ausführungsbeispiel, bei welchem der Kamera eine Auswerteeinheit zur Bildanalyse zugeordnet ist, werden der Fahrerassistenzvorrichtung lediglich die Ergebnisse der Bildanalyse übermittelt, beispielsweise eine Information bezüglich eines erkannten Gefahrenraumes und der Art des erkannten Gefahrenraums.

Des weiteren erfolgt eine Abschätzung der Entfernung zwischen der aktuellen Position des Fahrzeugs und dem erkannten Gefahrenraum. Der Gefahrenraum wird dabei an einer charakteristischen Linienkonstellation auf der Fahrbahn erkannt, beispielsweise ein Zebrastreifen anhand der breiten parallelen Linien, eine Ausfahrt bzw. Abzweigung durch ein Teilen einer Linie in zwei Linien und /oder eine Kreuzung durch Teilung von zwei Linien in jeweils zwei Linien. Die Abschätzung der Entfernung zwischen diesem charakteristischen Punkt, der einen Gefahrenraum repräsentiert und der aktuellen Position des Fahrzeugs erfolgt dann mittels eines Modells, z.B. eines Lochkameramodells, welches die Weltkoordinaten der Straße in Kamerakoordinaten transformiert und umgekehrt. Unter der Annahme, dass die erkannten Markierungen in einer Ebene liegen, lässt sich aus der Rücktransformation der Kamerakoordinaten in Weltkoordinaten die Entfernung zwischen dem Fahrzeug und dem Gefahrenraum abschätzen. Entsprechend übermittelt die Auswerteeinheit eine entsprechende Entfernungsgröße an die Fahrerassistenzvorrichtung 10.

Ist wie oben dargestellt ein Gefahrenraum erkannt worden, so bildet der Rechner 12 ein Steuersignal, welches er über die Ausgangsschaltung 16 an eine Stelleinrichtung 22 zur Einstellung der Fahrzeugbeleuchtung, insbesondere der Scheinwerfer abgibt. Das Steuersignal wird dabei in einer Ausführungsform derart gebildet, dass jedem erkannten Gefahrenraum ein bestimmtes Steuersignal zugeordnet ist, welches zu einer bestimmten Einstellung der Scheinwerfer im Sinne einer besseren Ausleuchtung des jeweiligen Gefahrenraums zugeordnet ist. Die Fahrzeugbeleuchtung, insbesondere die Scheinwerfer werden dann entsprechend dem Steuersignal verstellt.

Die Beeinflussung des Fahrzeuglichtes findet dabei im bevorzugten Ausführungsbeispiel derart statt, dass die Ausleuchtung durch wenigstens einen Scheinwerfer des Fahrzeugs derart verändert wird, dass der erkannte Gefahrenraum zu einem großen Teil beleuchtet wird, zusätzlich zu der vom Fahrzeug befahrenen Straße bzw. Fahrspur. Darüber hinaus wird in einem Ausführungsbeispiel die Lichtsteuerung abhängig von Fahrereingaben gemacht. Beispielsweise wird eine Abbiegespur nur dann ausgeleuchtet, wenn aufgrund einer Fahrereingabe (z.B. dem Setzen des Blinkers) davon auszugehen ist, dass der Fahrer ein Einschwenken auf die Abbiegespur wünscht.

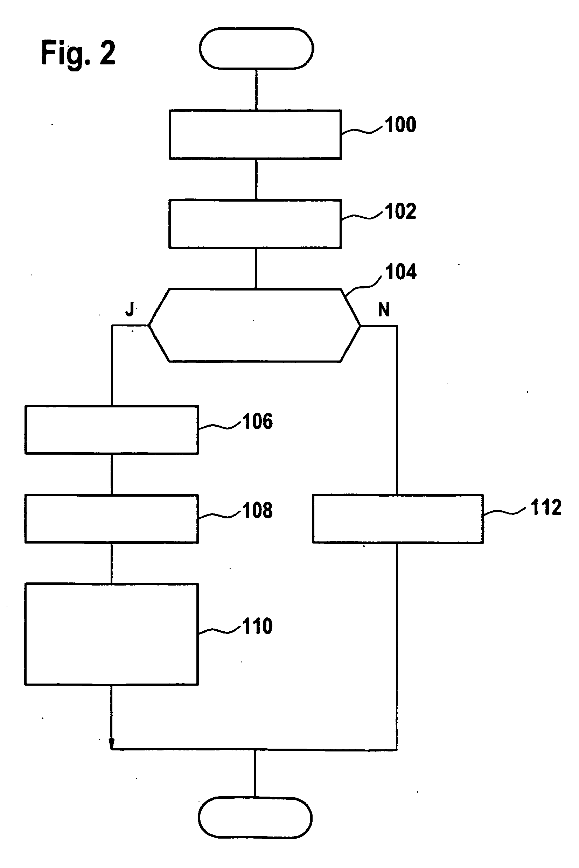

In einer bevorzugten Realisierung wird die oben skizzierte Vorgehensweise als Programm des Rechners 12 realisiert. Ein Beispiel für ein solches Rechnerprogramm ist in Figur 2 skizziert.

Das in Figur 2 skizzierte Programm wird mit Start des Fahrzeugs und/oder bei einer entsprechenden Aktivierung durch den Fahrer gestartet und in vorgegebenen Zeitintervallen durchlaufen.

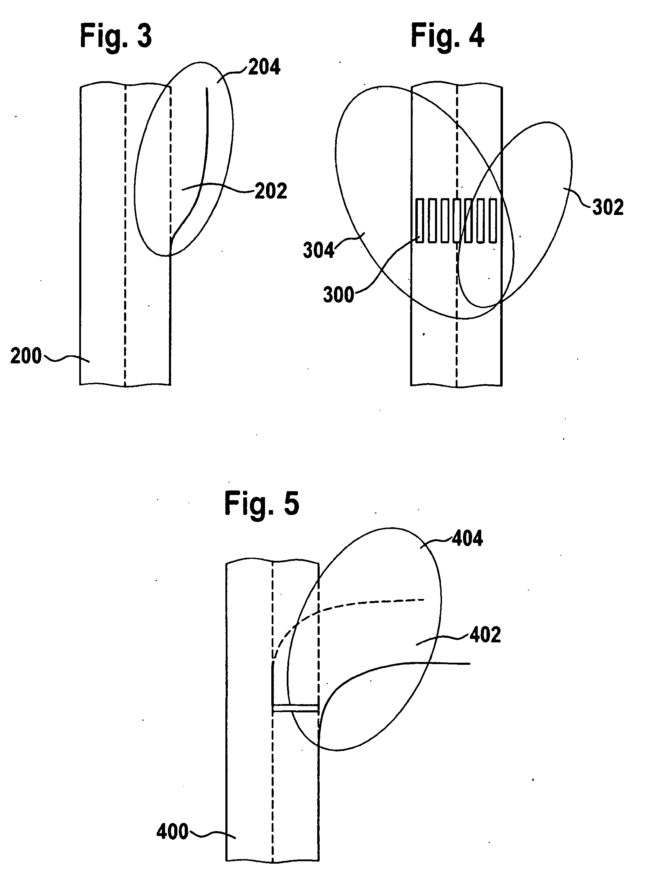

Zunächst wird im Schritt 100 wenigstens ein von der Kamera aufgenommenes Bild eingelesen. Daraufhin wird nach Maßgabe der oben dargestellten Vorgehensweise im Schritt 102 eine Analyse des Bildes dahingehend unternommen, ob vorbestimmte Verkehrselemente, die Gefahrenräume repräsentieren, auf dem Bild zu erkennen sind. Beispiele für solche Verkehrselemente sind Zebrastreifen, die anhand der breiten parallelen Linien erkannt werden, ferner eine Ausfahrt bzw. Abzweigung, die beispielsweise durch Änderung der Linienart von durchgezogen auf gestrichelt und durch Abzweigen der durchgezogenen Linie oder aber durch eine Teilung einer Linie in zwei Linien erkannt werden kann. Ein drittes Verkehrselement ist eine Kreuzung, die anhand der Aufteilung zweier Fahrbahnrandmarkierungen sowie ein Durchschneiden der Fahrspur durch wenigstens eine der Fahrbahnrandmarkierungen erkannt wird. Im darauf folgenden Schritt 104 wird abgefragt, ob ein derartiges Verkehrselement, welches einen der vorbestimmten Gefahrenräume definiert, erkannt wurde. Ist dies der Fall, so wird in einem Schritt 106 die Entfernung zu diesem Verkehrselement, insbesondere zu wenigstens einem seiner charakteristischen Punkte, eingelesen. Der Entfernungswert wird dabei wie oben angegeben aus der Bildanalyse abgeschätzt. Daraufhin wird in Schritt 108 eine Fahrerabsicht eingelesen, die beispielsweise im Setzen eines Blinkers, im Einleiten eines Bremsvorgangs, etc. besteht. Daraufhin wird im Schritt 110 ein Ansteuersignal zur Lichtsteuerung wenigstens eines Scheinwerfers ausgegeben. Die Lichtsteuerung ist dabei abhängig von der Art des Gefahrenraums und ergänzend von der geschätzten Entfernung des Gefahrenraums zum Fahrzeug und eventuell der erkannten Fahrerabsicht. Generell wird die Steuerung wenigstens eines Scheinwerfers des Fahrzeugs derart vorgenommen, dass der erkannten Gefahrenraum weitgehend ausgeleuchtet ist. Dazu werden in der Regel zusätzliche Bereiche neben dem vom Scheinwerfer bereits ausgeleuchteten Fahrbahnbereichen ausgeleuchtet. In der einfachsten Ausführungsform wird in Abhängigkeit der Art des Gefahrenraums (Zebrastreifen, Ausfahrt bzw. Abzweigung, Kreuzung) eine vorgegebene Einstellung der Lichtverteilung der Scheinwerfer ausgesteuert. Beispiele hierfür sind in den Figuren 3 bis 5 dargestellt. Die Entfernung zum Gefahrenraum wird berücksichtigt und die Lichtsteuerung wird mit abnehmender Entfernung zum Gefahrenraum im Sinne einer vollständigeren Ausleuchtung des Gefahrenraums verändert. Dies bedeutet beispielsweise bei Ausfahrten bzw. Abzweigungen, dass zunächst nur ein vergleichsweise geringer zusätzlicher Bereich ausgeleuchtet wird und bei zunehmender Annäherung an die Abbiegespur der zusätzlich ausgeleuchtete Bereich erweitert wird.

Ferner ist in einem Ausführungsbeispiel eine Berücksichtigung der Fahrerabsicht vorgesehen, so dass bei nicht vorhandener Fahrerabsicht keine Lichtsteuerung stattfindet, die Lichtsteuerung also nur bei vorhandener Fahrerabsicht erfolgt. Beispiel hierfür ist das Setzen des Blinkers bei Ausfahrten bzw. Kreuzungen, wobei eine Ausleuchtung des zusätzlichen Bereichs, insbesondere der Abbiegespur nur dann stattfindet, wenn der Fahrer eine Abbiegeabsicht zu erkennen gegeben hat, vorzugsweise indem er den Blinker des Fahrzeugs betätigt. Eine weitere Fahrerabsicht stellt das Einleiten eines Bremsvorgangs dar, welches ebenfalls eine Absicht des Fahrer zum Abbiegen bzw. Ausfahren repräsentiert.

Nach Ausgabe des Lichtsteuersignals wird das Programm mit Schritt 100 erneut durchlaufen.

Hat Schritt 104 ergeben, dass keines der vorbestimmten Verkehrselemente, die vorgegebene Gefahrenräume repräsentieren, erkannt wurde, wird gemäß Schritt 112 die Normaleinstellung des wenigstens einen Scheinwerfers beibehalten. Mit anderen Worten wird kein Steuersignal zum Ausleuchten zusätzlicher Bereiche erzeugt.

Ist im vorhergehenden Programmdurchlauf allerdings ein Gefahrenraum erkannt worden und eine entsprechende Lichtsteuerung vorgenommen worden, wird bei erstmalig nicht erkanntem Verkehrselement diese Lichtsteuerung noch beibehalten, für einen oder mehrere wenige Programmdurchläufe, um auch noch eine Ausleuchtung des zusätzlichen Bereichs sicherzustellen, wenn sich das betroffene Verkehrselement nicht mehr im Sichtbereich der Kamera befindet. Danach wird die Lichtsteuerung wieder normalisiert. Nach Schritt 112 wird das Programm wieder mit Schritt 100 zum nächsten Zeitintervall wiederholt.

Je nach Ausführung der Erfindung werden die oben genannten Verkehrselemente einzeln oder in beliebiger Kombination verwendet.

Die Figuren 3 bis 5 zeigen Beispiele für die oben dargestellte Lichtsteuerung. Dabei sind lediglich die zusätzlichen Ausleuchtungen dargestellt. Neben diesen zusätzlichen Ausleuchtungen ist selbstverständlich die übliche Beleuchtung der Fahrspur, auf der das Fahrzeug fahrt, vorhanden.

In Figur 3 ist die Situation einer Ausfahrt bzw. Abzweigung dargestellt. Es ist eine zweispurige Straße 200 dargestellt, bei der eine Ausfahrt bzw. Abbiegespur 202 vorhanden ist. Wird diese Abbiegespur beispielsweise anhand der Änderung der Linienart von einer durchgezogenen auf eine gestrichelte und Abzweigen der durchgezogenen Linie erkannt, so wird die Lichtsteuerung derart verändert, dass ein zusätzlicher Bereich 204 ausgeleuchtet wird.

Figur 4 zeigt eine entsprechende Vorgehensweise beim Erkennen eines Zebrastreifens 300. Dieser wird beispielsweise anhand von breiten parallelen Linien erkannt. In diesem Fall werden die zusätzlichen Bereiche 302 und 304 ausgeleuchtet, um auch die Randbereiche des Zebrastreifens gut erkennen zu können.

In Figur 5 ist die Situation einer Kreuzung dargestellt. Die zweispurige Straße 400 weist eine abbiegende Straße 402 auf. Dies wird erkannt analog zu der in Figur 3 dargestellten Verkehrssituation, nämlich anhand des Aufteilens von Randmarkierungen und/oder anhand von Linien, die schräg über die Spur laufen. In diesem Fall wird ein zusätzlicher Bereich 402 ausgeleuchtet, der in die abzweigende Fahrbahn hineinragt und auf diese Weise das vom Fahrer beim Abbiegen befahrenen Bereich ausleuchtet.

## Patentansprüche

1. Verfahren zur Fahrerunterstützung, wobei mittels wenigstens einer Kamera eine Szene vor dem Fahrzeug aufgenommen wird und anhand des aufgenommenen Bildes eine Analyse der Verkehrssituation erfolgt, wobei Verkehrselemente durch die Bildanalyse ermittelt werden, die auf potentielle Gefahrenräume hinweisen und bei erkannten potentiellen Gefahrenräumen eine Steuerung wenigstens eines Beleuchtungsmittels des Fahrzeugs derart erfolgt, dass ein zusätzlicher Bereich ausgeleuchtet wird, **dadurch gekennzeichnet, dass die Entfernung zum Gefahrenraum berücksichtigt und die Lichtsteuerung mit abnehmender Entfernung zum Gefahrenraum im Sinne einer vollständigeren Ausleuchtung des Gefahrenraums verändert wird.**

2. Verfahren nach Anspruch 1, **dadurch gekennzeichnet, dass** die Verkehrselemente Zebrastreifen, Ausfahrten und/oder Abzweigungen und/oder Kreuzungen sind.

3. Verfahren nach einem der vorhergehenden Ansprüche, **dadurch gekennzeichnet, dass** die Steuerung der Beleuchtung so erfolgt, dass der potentielle Gefahrenraum weitgehend ausgeleuchtet ist.

4. Verfahren nach einem der vorhergehenden Ansprüche, **dadurch gekennzeichnet, dass** ferner die Entfernung zum potentiellen Gefahrenraum ermittelt wird und die Lichtsteuerung abhängig von der ermittelten Entfernung ist.

5. Verfahren nach einem der vorhergehenden Ansprüche, **dadurch gekennzeichnet, dass** die Fahrerabsicht ermittelt wird und die Lichtsteuerung nur dann vorgenommen wird, wenn eine Fahrerabsicht erkannt wurde.

6. Verfahren nach Anspruch 5, **dadurch gekennzeichnet, dass** die Fahrerabsicht ein Abbiege- bzw. Spurwechselwunsch des Fahrers ist, der vorzugsweise durch Betätigen des Blinkers des Fahrzeugs erkannt wird.

7. Verfahren nach einem der vorhergehenden Ansprüche, **dadurch gekennzeichnet, dass** ein Zebrastreifen anhand von breiten parallelen Linien im Bild erkannt wird.

8. Verfahren nach einem der vorhergehenden Ansprüche, **dadurch gekennzeichnet, dass** eine Ausfahrt bzw. Abzweigung und/oder Kreuzung erkannt wird, wenn sich eine insbesondere durchgezogene Linie teilt, vorzugsweise in eine durchgezogene und in eine gestrichelte Linie.

9. Vorrichtung zur Fahrerunterstützung, mit einer Kamera, welche ein Bild der Szene vor einem Fahrzeug aufnimmt, mit Bildanalysemitteln, die Verkehrselemente im Bild erkennen, wobei Lichtsteuerungsmittel zur Steuerung des Fahrzeugslichts vorgesehen sind, welche derart angesteuert werden, dass potentielle Gefahrenräume durch zusätzliche Ausleuchtung von Bereichen neben der Fahrspur des Fahrzeugs ausgeleuchtet werden, wenn Verkehrselemente erkannt wurden, die auf potentielle Gefahrenräume hinweisen, **dadurch gekennzeichnet, dass die Entfernung zum Gefahrenraum berücksichtigt und die Lichtsteuerung mit abnehmender Entfernung zum Gefahrenraum im Sinne einer vollständigeren Ausleuchtung des Gefahrenraums verändert wird.**

## Claims

1. Driver assist method and device, wherein a scene in front of the vehicle is recorded by means of at least one camera and an analysis of the traffic situation is carried out on the basis of the recorded image, wherein by means of the image analysis traffic elements are determined which indicate potential hazardous spaces, and when potential hazardous spaces are detected at least one lighting means of the vehicle is controlled in such a way that an additional area is illuminated, **characterized in that** the distance from the hazardous spaces is taken into account and the light control is changed with decreasing distance from the hazardous space with the effect of bringing about more complete illumination of the hazardous space.

2. Method according to Claim 1, **characterized in that** the traffic elements are zebra crossings, exits and/or turnoffs and/or intersections.

3. Method according to one of the preceding claims, **characterized in that** the illumination is controlled in such a way that the potential hazardous space is largely illuminated.

4. Method according to one of the preceding claims, **characterized in that**, in addition, the distance from the potential hazardous space is determined and the light control is carried out as a function of the determined distance.

5. Method according to one of the preceding claims, **characterized in that** the driver's intention is determined and the light control is performed only if a driver's intention has been detected.

6. Method according Claim 5, **characterized in that** the driver's intention is a request by the driver to turn off or change lane, said request being preferably detected by activation of the flashing indicator light of the vehicle.

7. Method according to one of the preceding claims, **characterized in that** a zebra crossing is detected on the basis of wide parallel lines in the image.

8. Method according to one of the preceding claims, **characterized in that** an exit or turnoff and/or intersection is detected if a, in particular, continuous line divides, preferably into a continuous line and a dashed line.

9. Driver assist device, having a camera which records the image of the scene in front of a vehicle, with image analysis means which detect traffic elements in the image, wherein light control means are provided for controlling the vehicle light, which control means are actuated in such a way that potential hazardous spaces are illuminated by additional illumination of areas next to the lane of the vehicle if traffic elements have been detected which indicate potential hazardous spaces, **characterized in that** the distance from the hazardous space is taken into account and the light control is changed with decreasing distance from the hazardous space with the effect of bringing about more completed illumination of the hazardous space.

## Revendications

1. Procédé d'assistance au conducteur, dans lequel une scène se déroulant en avant du véhicule est enregistrée au moyen d'au moins une caméra et une analyse de la situation du trafic est effectuée à l'aide de l'image enregistrée, l'analyse d'image déterminant des éléments de trafic qui indiquent des espaces potentiellement dangereux et, lorsque des espaces potentiellement dangereux sont détectés, une commande d'au moins un moyen d'éclairage du véhicule a lieu de manière à éclairer une zone supplémentaire, **caractérisé en ce que** la distance par rapport à l'espace dangereux est prise en compte et la commande de la lumière est modifiée dans le sens d'un éclairage plus complet de l'espace dangereux lorsque la distance par rapport à l'espace dangereux diminue.

2. Procédé selon la revendication 1, **caractérisé en ce que** les éléments de trafic sont des passages pour piétons, des sorties, des bifurcations et/ou des croisements.

3. Procédé selon l'une des revendications précédentes, **caractérisé en ce que** la commande de l'éclairage a lieu de telle sorte que l'espace potentiellement dangereux soit largement éclairé.

4. Procédé selon l'une des revendications précédentes, **caractérisé en ce qu'**en outre la distance par rapport à l'espace potentiellement dangereux est déterminée et **en ce que** la commande de la lumière dépend de la distance déterminée.

5. Procédé selon l'une des revendications précédentes, **caractérisé en ce que** l'intention du conducteur est déterminée et **en ce que** la commande de la lumière n'est activée que si une intention du conducteur a été détectée.

6. Procédé selon la revendication 5, **caractérisé en ce que** l'intention du conducteur est un souhait de sortie ou de changement de voie de circulation du conducteur, détecté de préférence par l'actionnement des feux clignotants du véhicule.

7. Procédé selon l'une des revendications précédentes, **caractérisé en ce qu'**un passage pour piétons est détecté par la présence de larges lignes parallèles dans l'image.

8. Procédé selon l'une des revendications précédentes, **caractérisé en ce qu'**une sortie, une bifurcation et/ou un croisement sont détectés si une ligne, en particulier continue, se divise, de préférence en une ligne continue et en une ligne interrompue.

9. Dispositif d'assistance au conducteur, doté d'une caméra qui enregistre une image d'une scène qui se déroule à l'avant d'un véhicule et de moyens d'analyse d'image qui détectent dans l'image des éléments de trafic, des moyens de commande d'éclairage étant prévus pour commander l'éclairage du véhicule et étant commandés de telle sorte que des espaces potentiellement dangereux sont éclairés par éclairage supplémentaire de zones situées à côté de la trajectoire du véhicule si des éléments de trafic qui indiquent un espace potentiellement dangereux ont été détectés, **caractérisé en ce que** la distance par rapport à l'espace dangereux est prise en compte et la commande de la lumière est modifiée dans le sens d'un éclairage plus complet de l'espace dangereux lorsque la distance par rapport à l'espace dangereux diminue.
